Europäisches Patentamt

**European Patent Office**

**Office européen des brevets**

(11) Publication number: **0 180 695**

**A1**

(12) # EUROPEAN PATENT APPLICATION

(21) Application number: **84850342.1**

(22) Date of filing: **06.11.84**

(51) Int. Cl.⁴: **F 16 B 12/30**
**F 16 B 12/40**

(43) Date of publication of application:
**14.05.86 Bulletin 86/20**

(84) Designated Contracting States:
**AT BE CH DE FR GB LI NL**

(71) Applicant: **EHT SYSTEM AB**
**Emilstorpsgatan 27**
**S-213 64 Malmö(SE)**

(72) Inventor: **Offenbroich, Adrian Gottfried**
**Kaiserswertherstrasse 115**
**D-4000 Düsseldorf 13(DE)**

(74) Representative: **Berglund, Gustav Arthur et al,**
**AWAPATENT AB Box 5117**
**S-200 71 Malmö(SE)**

(54) **Device in and connecting piece for a square tube assembly, and a fixture for manufacturing the device.**

(57) For connecting one square tube to another square tube or like element, there is provided a circumferentially incomplete inner thread which occupies at least two opposite partial areas 10 of the inner sides of two of the walls of the square tube which are of substantially equal thickness. The inner thread leaves the outer surfaces of said walls unaffected and is arranged for engaging a substantially cylindrical connecting piece (16,18) (27,28). The connecting piece has an external thread corresponding to the internal thread and is connectible to another square tube or like element.

A fixture for making the inner thread in a simple manner has a body 38 and at least two side members 39 projecting therefrom for fixing the body 38 on a square tube. The body 38 has a through bore with an internal thread for guiding a screw tap for cutting the desired internal thread in the square tube.

FIG.1

DEVICE IN AND CONNECTING PIECE FOR A SQUARE TUBE
ASSEMBLY, AND A FIXTURE FOR MANUFACTURING
THE DEVICE

The present invention relates to a device in a square tube for connecting the tube to another square tube or like structural element. The invention also relates to a fixture for manufacturing the device. In addition, the invention relates to a connecting piece for detachably joining two substantially square-shaped structural elements.

Frame structures composed of square tubes are used for many different purposes, e.g. for making frames of different shapes and sizes to be used as display stands, storage racks, exhibition stands and as frames for furniture and other fittings and installations at home, in the industry and in public places.

For joining the square tubes to each other and to other structural elements, many types of connecting devices are known. It should be noted that by "square tubes" as referred to in this specification is generally meant tubes having four sides. In terms of geometry, they may be of either square or rectangular cross-section.

By means of a connecting joint which has two legs at right angles to each other and a central body holding the legs together, it is possible to interconnect two square tubes at right angles to each other. As an alternative, the central body holding the elements together may be dispensed with or replaced by some kind of a screw assembly or hook means, the legs forming separate connecting pieces.

The tube ends may then be fixed each on one leg or connecting piece by friction fit, the legs and the connecting pieces being suitably made of a softer material than the tubes (cf. for instance SE patent specification 338,757), by locking the tube ends by means of transverse pins or by expanding the legs or the connecting pieces after insertion in the tube ends (cf. for instance SE patent specifications 385,233 and 319,046).

The connecting pieces may also be fixed in the tube ends by welding, if the tube material is weldable, or by such deformation of the tube end walls that portions thereof will engage in depressions in the side surfaces of the connecting piece.

Most of the connecting devices and techniques described above have been used extensively. However, in respect of physical properties and/or manufacturing costs, they are not quite acceptable.

A special, known connecting piece for detachably joining two structural elements substantially in the form of square tubes, one of which has an engageable edge and the other, at a connecting end, has a cavity with at least two opposite walls, consists of a sleeve which is insertable and fixable in the cavity and has a first bore for receiving a clamping body which has a hook at one end for engaging said edge and a bevelled surface at its portion inserted in the sleeve for cooperating with a clamping screw movable transversely of the longitudinal axis of the body and accommodated in a second, threaded bore provided in the sleeve transversely of the longitudinal direction of the first bore. For fixing the sleeve in the second element, use is made of the clamping screw which with an outer portion is caused to engage one edge of an opening in a wall of the cavity. One drawback of this prior art solution is the relatively high stress which appears at the surface of engagement between the clamping screw and the edge of the opening in the wall.

A first object of the present invention therefore is to provide a device for connecting square tubes to each other or to other structural elements which

is inexpensive, yet sufficiently strong, and usable, irrespective of the tube material.

According to the invention, this object is achieved by means of a device in square tubes which is characterised by a circumferentially incomplete internal thread which occupies at least two opposite partial areas of the inner sides of two of the walls of the square tube which are of substantially equal thickness, and leaves the outer surfaces of said walls unaffected and is arranged for engaging a substantially cylindrical connecting piece which is an external thread corresponding to said internal thread, and is connectible to another square tube or other structural element.

Another object of the present invention is to provide a fixture by means of which the above-mentioned device can be manufactured in a simple manner.

According the invention, this second object is achieved by a fixture comprising a body which has a through bore with an internal thread for guiding a screw tap for cutting the desired internal thread in a square tube, and at least two side members projecting from the body in the direction of the bore for fixing the body on a square tube with the bore in the desired position for cutting the internal thread of the square tube.

A third object of the present invention is to provide a connecting piece which is an improvement of said special connecting piece described above, in order to improve the transmission of the required clamping force to said other element.

According to the invention, this third object is achieved in that the sleeve is cylindrical with the axis of the cylinder parallel to the longitudinal axis of the first bore and has an external thread. for engaging at least two partial areas of said two walls of the cavity.

4

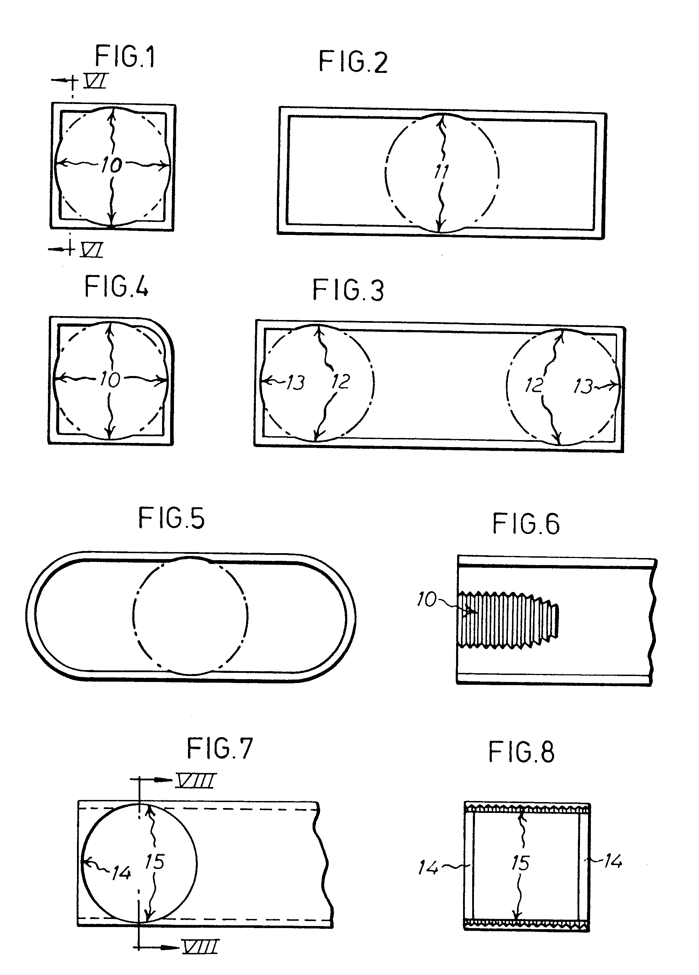

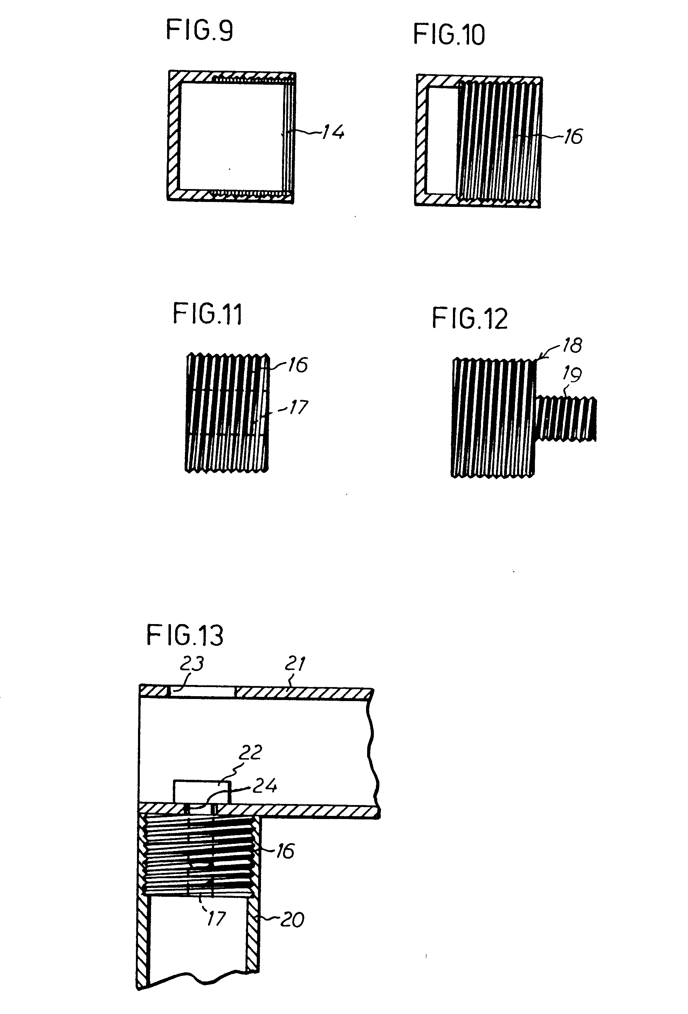

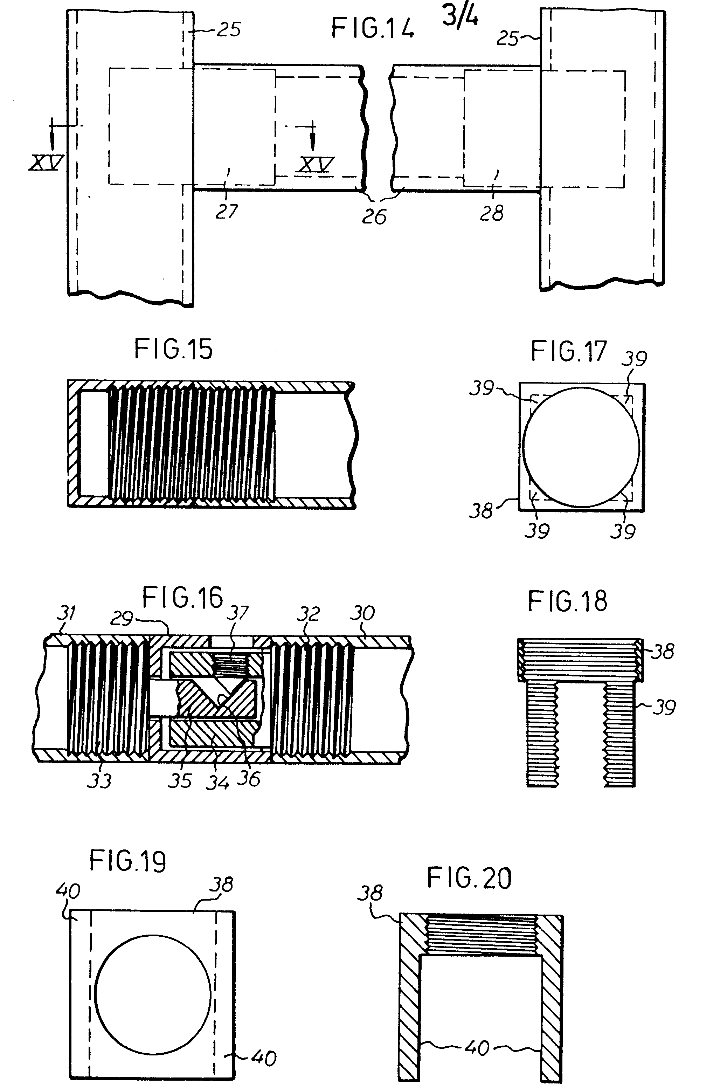

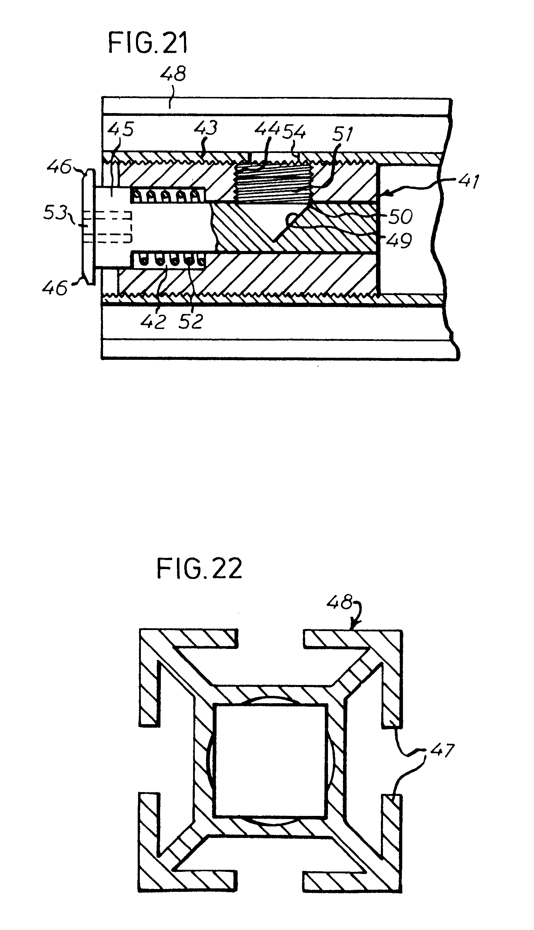

Different embodiments of the device and the fixture according to the present invention will be described in greater detail hereinbelow with reference to the accompanying drawings. Figs. 1-5 are end views of square tubes designed in accordance with the present invention. Fig. 6 is a longitudinal section taken along the line VI-VI in Fig. 1. Fig. 7 is a side view of a square tube in a second embodiment of the device according to the invention. Fig. 8 is cross-sectional view taken along the line VIII-VIII in Fig. 7. Fig. 9 is a view similar to that of Fig. 8 and illustrates an alternative embodiment. Fig. 10 illustrates the tube in Fig. 9 with a connecting piece screwed in. Figs. 11 and 12 show two examples of connecting pieces usable in the device according to the invention. Fig. 13 is a longitudinal section of an example of the interconnection of square tubes in accordance with the present invention. Fig. 14 is a side view showing a second example of the interconnection of square tubes in accordance with the present invention. Fig. 15 is a cross-sectional view taken along the line XV-XV in Fig. 14. Fig. 16 is a cross-section of a third example of the interconnection of square tubes in accordance with the present invention. Figs. 17 and 18 show a first and Figs. 19 and 20 a second embodiment of a fixture according to the invention. Fig. 21 is a longitudinal section of a connecting piece according to the invention, and Fig. 22 is a cross-section of the square tube in Fig. 21.

In the drawings, Figs. 1-5 illustrate by way of example four different square profiles to which the present invention is applicable. The tube in Fig. 1 has a square cross-section, the tubes in Figs. 2 and 3 have a rectangular cross-section, the tube in Fig. 4 has a square cross-section with one rounded corner, and the tube in Fig. 5 has substantially rectangular cross-section with rounded short sides.

According to the invention, a square tube which should form a frame member in a frame system is provided with a circumferentially incomplete internal thread which is cut from one end of the tube, as shown in Figs. 1, 2, 4 and 5. The outer diameter of the internal thread is slightly smaller than the corresponding width of the tube, such that the internal thread will occupy at least two opposite partial areas of the inner sides of two walls of substantially equal thickness of the tube, and will leave the outer surfaces of said walls intact. In the tube of Fig. 1 of square cross-section where the outer diameter of the internal thread may be 28 mm, the width of the tube 30 mm and the wall thickness 2 mm, the incomplete internal thread occupies four partial areas 10 at the inner sides of the tube. The same applies to the tube of Fig. 4. In the rectangular tube of Fig. 2, two opposite partial areas 11 provided with the internal thread are located centrally at the inner sides of the long walls of the square tube. The rectangular tube in Fig. 3 is provided with two internal threads, each of which occupies three partial areas at the inner sides of the tube and, more precisely, one partial area 12 of the inner side of each of the two long walls of the square tube, and another partial area at the inner side of one of the short walls of the square tube.

The appearance of the thread in one of the partial areas 10 in the square tube according to Fig. 1 appears more clearly from Fig. 6. As shown in this Figure, the internal thread has a limited length which may suitably be such that a connecting piece screwable into the internal thread can be screwed to a predetermined depth, for instance such that one outer side of the connecting piece will be located substantially in the same plane as the end of the square tube.

In the embodiments according to Figs. 1-6, the centre line of the internal thread is parallel to the longitudinal direction of the tube. However, it is also possible to use an internal thread whose centre line is at right angles to the longitudinal direction of the tube. An example of this is shown in Figs. 7-10 which illustrate a tube of a square cross-section. As shown in Figs. 7 and 8, two circular openings 14 are provided in two opposite side walls of the square tube. In this case, too, a circumferentially incomplete inner thread occupies two opposite partial areas 15 of the inner sides of the two tube walls which are not provided with the openings 14. The internal thread here extends over the entire width of the square tube, i.e. from one opening 14 to the other.

Alternatively, a single opening 14 may be provided in the square tube, the internal thread extending from this opening only through part of the entire width of the square tube, as shown in Fig. 9. The opening 14 may have an internal thread, as shown in Fig. 9, or no such thread, as shown in Fig. 8. In Fig. 10, the tube of Fig. 9 is shown with a connecting piece 16 screwed into it.

As shown in Fig. 11, the connecting piece 16 may have a threaded centre bore 17. An alternative connecting piece 18 shown in Fig. 12 has a threaded extension 19 whose diameter is smaller than the diameter of the part of the connecting piece which is screwable into a square tube. However, the extension 19 may also have the same diameter as the rest of the connecting piece 18.

The interconnection of two square tubes as shown in Fig. 13 relies on a connecting piece 16 according to Fig. 11 which is screwed into the end of a first square tube 20. A second square tube 21 is fixed at right angles to the square tube 20 by means of a screw 22 which may be inserted through an opening 23 in the wall of the square tube 21 which is opposite to the square tube 20. The screw 22 is screwed through a second opening 24 in the centre bore 17 of the connecting piece 16 screwed into the tube 20. The screw 22 may be tightened for instance through the hole 23. After the tubes 20 and 21 have been joined, the opening 23 in the tube 21, like the end opening thereof, can be closed by suitable plastic elements.

In Fig. 14, there are shown two posts 25 consisting of square tubes and interconnected by means of a horizontal frame member in the form of a square tube 26. Openings and internal threads are provided in the tubes 25 in the manner appearing from Fig. 9, while the two ends of the tube 26 have internal threads according to Fig. 1. However, it should be noted that one of the inner threads has a left-hand thread and the other a right-hand thread. The same applies to the threads in the two tubes 25. For joining the tube 26 to the tubes 25, use is made of connecting pieces 27 and 28 one of which has a left-hand thread and the other a right-hand thread, with one and the same diameter throughout the entire length. After the two connecting pieces have been screwed into either of the tubes 25 and 26, the two tubes 25 can be finally joined to the tube 26 by turning the tube 26 about its longitudinal axis. As a result of the left-hand and right-hand threads, the tube 26 can be fixed at the same time against both tubes 25.

In Fig. 16, there is shown a vertical square tube 29 to which are connected two horizontal square tubes 30 and 31 aligned with each other. A connecting piece 32 is screwed into the tube 30, while a connecting piece 33 is screwed into the end of the tube 31. The connecting piece 32 is formed integrally with or is fixedly connected by means of a screw assembly to a sleeve 34 whose outer dimensions correspond to the inner dimensions of the tube 29. Similarly, the connecting piece 33 is formed integrally with or connected by means of a screw assembly to a pin 35 which extends into the bore of the sleeve 34 and has a bevelled surface 36 for cooperating with a screw screwable in a threaded bore in the sleeve 34. When the screw 37 is tightened, its pointed end will press against the bevelled surface 36 such that the pin 35 and the sleeve 34 and, thus, the tubes 31 and 30 are urged towards each other and against a respective side of the tube 29.

In order to make internal threads of adequate quality in the square tubes, it is advantageous to resort to some kind of guiding when cutting the threads. If the square tubes consist of a relatively soft material, such as aluminium, the internal threads may however be formed by means of a self-tapping connecting piece of a harder material. When guiding is required for the thread-cutting operation, for instance in tubes of iron or steel, a fixture may be used according to the invention. However, also in the case of tubes of such harder materials, it is possible to use a self-tapping connecting piece.

A first embodiment of such a fixture is shown in Figs. 17 and 18. The fixture has a body 38 with a through bore having the same internal thread as the internal thread one wishes to cut in a square tube. Four side members 39 project from the body 38 in the direction of the bore. The outer dimensions of the side members 39 in this case correspond to the inner dimensions of the square tube in which an internal thread is to be cut.

An alternative embodiment of a fixture for making the internal threads of the square tubes is shown in Figs. 19 and 20. This fixture, too, has a body 38 with a threaded through bore. The fixture in Figs. 19, 20 has however only two planar side members 40 which are parallel and spaced apart by a distance which corresponds to at least one width of a square tube. The fixture according to Figs. 19, 20 is advantageous since it can be used for square tubes of equal outer dimensions, irrespective of the thickness of the tube material.

In a modified embodiment, the fixture of Figs. 19, 20 may have four side members. As a further modification, the fixture in Figs. 19, 20 may have a bottom wall which interconnects the free ends of the side members 40. Such a fixture would be suitable for cutting internal threads in square tubes of the type illustrated in for instance Figs. 7-10, provided the opening defined by said bottom wall, the side members 40 and the body 38 corresponds to the cross-section of the square tube.

Fig. 21 is a longitudinal section of yet another example of a connecting piece 41 which is usable in the device according to the invention and which has a central longitudinal bore 42 of circular cross-section and with an enlarged diameter at one end. The connecting piece 41 which is substantially cylindrical like the connecting pieces described above has an external thread 43 which may however be slightly conical to be self-tapping in a square tube. A radial threaded bore 44 extends from the outer circumferential surface of the connecting piece 41 to the narrower section of the bore 42. A clamping body 45 has a narrower portion of the same cross-sectional shape as the narrower section of the bore 42 and a thicker portion associated with the narrower portion and having the same cross-sectional shape as the enlarged portion of the bore 42.

At the free end of the thicker portion, the clamping body 45 has a head which is designed as a hook with two opposing lugs 46 directed away from each other, and which is intended for engagement with e.g. engageable edges 47 of a profiled tube which may be

0180695

similar to the profiled tube 48 into which the connecting piece 41 is screwed, as illustrated, and which has a cross-section as shown in Fig. 22. In its narrow portion, the clamping body 45 has a conical depression 49 which is oriented transversely of the longitudinal axis of the clamping body, has an acute angle of approximately 90° and forms a bevelled surface 50 for cooperating with the conical pointed end of a clamping screw 51 screwable in the bore 44.

In connection with the insertion of the clamping body 45 in the bore 42, a helical compression spring 52 is placed in the interspace between the widened portion of the bore 42 and the narrow portion of the clamping body 45. By tightening the clamping screw 51 in the bore 44 so as to engage the bottom of the depression 49, the clamping body 45 is fixed with respect to the connecting piece 41. This fixing operation is performed before the connecting piece 41 is screwed into the square tube 48. For screwing the connecting piece 41 into the square tube 48 with a self-tapping action, use is suitably made of a hexagon wrench which engages an axial hexagonal recess 53 provided in the head of the clamping body 45. Tightening may be effected to such an extent that the inner sides of the lugs 46 are substantially flush with the end surface of the square tube 48. To make it possible to disengage the clamping body 45 after the connecting piece 41 has been screwed into the square tube 48 and thereafter again pull the clamping body into the connecting piece, a hole 54 is made in one or more of the walls of the square tube 48 opposite the bore 44 and suitably has a diameter which is smaller than that of the bore 44, such that the clamping screw 51 can be unscrewed radially but not leave through the hole 54 in the wall of the square tube. The clamping screw 51 has such a length that when it is unscrewed into engagement with the inner side of a wall of the square tube 48, so as to fix the connecting piece 41 in the square tube 48, it will determine such an outer position for the clamping body 45 as is suitable for the engagement of the lugs 46 with engageable edges 47 on for instance a profiled tube 48.

A number of modifications of the embodiment described above are possible without departing from the spirit and scope of the invention. For instance, the outer portion of the sleeve of the connecting piece may be replaced by a separate insert having the same cross-sectional shape as the cavity of the inner square tube of the profiled tube 13, and provided with a collar or flange which fits between the engageable edges 14 to prevent any relative rotation of the structural elements joined to each other.

12                                    0180695

## CLAIMS

1. A device for connecting one square tube to another square tube or other element for constructing a frame system of square tubes usable as a stand or rack, c h a r a c t e r i s e d by a circumferentially incomplete internal thread which occupies at least two opposite partial areas (10, 11, 12, 13, 15) of the inner sides of two of the walls of the square tube which are of substantially equal thickness, and leaves the outer surfaces of said walls unaffected and is arranged for engaging a substantially cylindrical connecting piece (16, 18) which has an external thread corresponding to said internal thread, and is connectible to another square tube or other element.

2. Device as claimed in claim 1, c h a r a c - t e r i s e d in that the centre line of the internal thread is parallel to the longitudinal direction of the tube.

3. Device as claimed in claim 1, c h a r a c - t e r i s e d in that the centre line of the internal thread is perpendicular to the longitudinal direction of the tube and that at least one of the side walls of the square tube has an opening (14) to allow insertion of the connecting piece (16).

4. Device as claimed in claim 2 for square tubes of rectangular cross-section, c h a r a c t e r i s - e d by double internal threads each of which occupies a partial area (12, 13) of each inner side of the two long walls and one short wall of the square tube.

5. Device as claimed in any one of claims 1-4, c h a r a c t e r i s e d by at least one connecting piece (16, 18) having a threaded centre bore (17) or a threaded extension (19) of a diameter which is equal to or less than the diameter of the portion of the connecting piece which is screwed into the square tube.

0180695

6. Device as claimed in any one of claims 1-5, c h a r a c t e r i s e d in that the internal thread is formed by means of a self-tapping connecting piece of a material harder than that of the square tube.

7. A fixture for producing the device as claimed in any one of claims 1-7, c h a r a c t e r i s e d by a body (38) which has a through bore with an internal thread for guiding a screw tap for cutting the desired internal thread in a square tube, and at least two side members (39; 40) projecting from the body in the direction of the bore for fixing the body on a square tube with the bore in the desired position for cutting the internal thread of the square tube.

8. Fixture as claimed in claim 7, c h a r a c - t e r i s e d in that the side members (40) are parallel pairwise with a relative spacing which corresponds to the width of at least one side of the square tube.

9. A connecting piece for detachably joining two substantially square-shaped structural elements (48), one of which has an engageable edge (47) and the other, at a connecting end, has a cavity with at least two opposite walls, said connecting piece consisting of a sleeve with a first bore for receiving a clamping body (45) which has a hook (46) at one end for engaging said edge and a bevelled surface (49) at its portion inserted in the sleeve for cooperating with a clamping screw (51) which is movable transversely of the longitudinal axis of the body and is received in a second, threaded bore (44) provided in the sleeve transversely of the longitudinal axis of the first bore, c h a r a c t e r i s e d in that the sleeve (41) is cylindrical with the axis of the cylinder parallel to the longitudinal axis of the first bore and has an external thread for engaging at least two partial areas of said two walls of the cavity.

10. Connecting piece as claimed in claim 9, c h a - r a c t e r i s e d in that the clamping body (45) has an axial hexagonal recess (53) at its outer end.

0180695

1/4

FIG.1

FIG.2

FIG.4

FIG.3

FIG.5

FIG.6

FIG.7

FIG.8

FIG.9

FIG.10

_14_

_16_

FIG.11

FIG.12

_16_

_17_

_18_

_19_

FIG.13

_23_    _21_

_22_

_24_

_16_

_17_    _20_

FIG.14

25    25

XV    XV

27    26    28

FIG.15

FIG.17

39    39

38

39    39

FIG.16

31  29  37  32  30

33  35  34  36

FIG.18

38

39

FIG.19

40    38

40

FIG.20

38

40

FIG.21

FIG.22

0180695

# EUROPEAN SEARCH REPORT

European Patent Office

Application number

EP 84 85 0342

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 554 300 (KLUGE) * Pages 4,5; claim 1; figures 1-4,8,9 * | 1-6 | F 16 B 12/30 F 16 B 12/40 |
| Y | | 9 | |
| X | CH-A- 488 432 (STYNER & BIENZ) * Column 3, lines 13-37; figures 1,3 * | 1,2,5 | |
| Y | FR-A-2 267 472 (SYMA) * Claim 1; figure 3 * | 9 | |
| A | GB-A-1 410 762 (BLOOHN) * Figures 3,4,6 * | 1 | |

|  |
|---|
| TECHNICAL FIELDS SEARCHED (Int. Cl.4) |
| F 16 B |

The present search report has been drawn up for all claims

| Place of search | Date of completion of the search | Examiner |
|---|---|---|
| THE HAGUE | 12-06-1985 | SCHMITTER BERNARD |